# EUROPÄISCHE PATENTSCHRIFT

(11) **EP 2 492 549 B1**
(45) Veröffentlichungstag und Bekanntmachung des Hinweises auf die Patenterteilung: **17.04.2013**
(21) Anmeldenummer: 11001489.1
(22) Anmeldetag: 23.02.2011
(51) Int. Cl.: F16J 3/04, B66F 3/24

(54) **Balganordnung und Verfahren zur Herstellung einer Balgeinheit**
Bellows assembly and method for producing a bellows unit
Agencement de traverse et procédé de fabrication d'une unité de traverse

(43) Veröffentlichungstag der Anmeldung: 29.08.2012
(73) Patentinhaber: FESTO AG & Co. KG, 73734 Esslingen (DE)
(72) Erfinder: Schantze, Achim, 72172 Sulz am Neckar (DE); Müller, Alexander, 71737 Kirchberg (DE); Lorenz, Bernd, 73666 Baltmannsweiler (DE)
(74) Vertreter: Abel, Martin

(56) Entgegenhaltungen:
- CH-A- 500 379
- FR-A1- 2 305 381
- FR-A1- 2 632 893
- GB-A- 2 192 232

## Beschreibung

Die Erfindung betrifft eine Balganordnung, mit mindestens einer Balgeinheit, die einen eine mit Fluid befüllbare Balgkammer umschließenden Balgkörper aufweist, dessen Wandung zumindest partiell von einem einstückigen, gummielastischen Membranelement gebildet ist, das wenigstens zwei sich in Achsrichtung einer Längsachse der Balgeinheit mit Abstand gegenüberliegende Stirnwände und eine die beiden Stirnwände peripher verbindende Umfangswand aufweist.

Die Erfindung betrifft ferner ein Verfahren zur Herstellung einer Balgeinheit, die einen eine mit Fluid befüllbare Balgkammer umschließenden Balgkörper aufweist, dessen Wandung zumindest partiell von einem einstückigen, gummielastischen Membranelement gebildet ist, das wenigstens zwei sich in Achsrichtung einer Längsachse der Balgeinheit mit Abstand gegenüberliegende Stirnwände und eine die Stirnwände peripher verbindende Umfangswand aufweist.

Aus der DE 4103670 A1 ist eine entsprechend aufgebaute Luftfederbalganordnung bekannt, die sich aus mehreren axial aneinandergereihten Balgeinheiten zusammensetzt. Jede Balgeinheit verfügt über einen Balgkörper, der eine mit Fluid befüllbare Balgkammer umschließt und dessen Wandung teilweise von metallischen Anschlussplatten und teilweise von einem einstückigen, gummielastischen Membranelement gebildet ist. Das Membranelement verfügt über mehrere Paare sich in Achsrichtung der Balgeinheit mit Abstand gegenüberliegender Stirnwände, die durch eine eine gewölbte Querschnittskontur aufweisende Umfangswand peripher miteinander verbunden sind, um eine Ringfalte zu bilden. Mehrere solcher Ringfalten sind mittels taillierter Übergangsbereiche einstückig miteinander verbunden, um eine Faltenstruktur zu erzielen.

Eine aus der DE 202006006113 U1 bekannte Faltenbalganordnung verfügt über eine Balgeinheit mit einem aus einem gummielastischen Material bestehenden einstückigen, im Wesentlichen mäanderförmig strukturierten Balgkörper. Der Balgkörper definiert mehrere axial aufeinanderfolgend angeordnete, jeweils in einem Taillenbereich einstückig miteinander verbundene Ringfalten. Je nach Einsatzzweck können stirnseitig an dem Balgkörper unterschiedliche Anschlussplatten befestigt werden, die beispielsweise als Befestigungsschnittstelle fungieren oder einen Fluidkanal definieren, um eine Zufuhr und Abfuhr eines Fluides zu ermöglichen.

Die bekannten Balganordnungen verfügen über eine relativ geringe radiale Tiefe ihrer Ringfalten. Auch weisen die einstückigen Membranelemente stirnseitig eine relativ große Öffnung auf. Vermutlich ist dies gewissen zwängen bei der Herstellung geschuldet, um den Innenraum des Membranelementes für Werkzeuge leicht zugänglich zu halten und um diese Werkzeuge auch wieder leicht entfernen zu können. Mit dieser Ausgestaltung ist jedoch unter anderem der Nachteil verbunden, dass im maximal axial zusammengedrückten Zustand des Balgkörpers in dessen Innerem ein relativ großes Totvolumen verbleibt, was beispielsweise bei einer Nutzung einer Balgeinheit als fluidbetätigter Aktuator einen unerwünscht hohen Fluidverbrauch zur Folge hat.

Die gattungsgemäße FR 2 305 381 A1 offenbart ein aufblasbares Kissen, dessen Wandung eine dichte Innenlage aus Gummi, eine zum Schutz dienende Außenlage und eine dazwischen liegende Kabelverstärkung aufweist. Aus der CH 500 379 A ist eine Zylinder-Vorrichtung bekannt, die einen Balg aufweist, der aus mehreren Taschen besteht, die jeweils eine undurchlässige Innenlage enthalten, die von zwei weiteren Schichten umschlossen ist.

Eine wesentliche Aufgabe der Erfindung besteht darin, eine Balganordnung der eingangs genannten Art zu schaffen, die bei einfacher Herstellung energetisch günstig betreibbar ist. Außerdem soll ein günstiges Verfahren zur Herstellung der Balgeinheit einer solchen Balganordnung vorgeschlagen werden.

Die Aufgabe wird bei einer Balganordnung der eingangs genannten Art dadurch gelöst, dass die Balgeinheit einen unverlierbar in der Balgkammer angeordneten und bezüglich des Balgkörpers separaten Füllkörper aufweist, dessen Gestalt zumindest im Wesentlichen der Negativform der von dem Membranelement begrenzten Bereiche der Balgkammer entspricht.

Durch den in der Balgkammer angeordneten, bezüglich des Balgkörpers separaten Füllkörper wird das Totvolumen der nicht mit Fluid beaufschlagten Balgkammer auf ein Minimum reduziert. Dementsprechend ist das bei Anwendung der Balgeinheit unnötig mit Fluid zu beaufschlagende Volumen der Balgkammer äußerst gering. Indem die Gestalt des Füllkörpers zumindest im Wesentlichen der Negativform der von dem Membranelement begrenzten Bereiche der Balgkammer entspricht, verbleibt im nicht fluidbeaufschlagten Zustand der Balgkammer kein oder höchstens ein sehr geringer Zwischenraum zwischen der Wandung des Membranelementes und dem diesbezüglich gesondert ausgebildeten Füllkörper. Der Füllkörper kann zwar im Prinzip mehrteilig ausgebildet sein, ist vorzugsweise jedoch als einstückiger Körper realisiert. Der innen liegende Füllkörper kann im nicht fluidbeaufschlagten Zustand der Balgkammer auch eine Abstützfunktion bezüglich des Membranelementes übernehmen und insbesondere auch dafür sorgen, dass die beiden Stirnwände durch gleichzeitige Anlage an einander entgegengesetzten Stirnflächen des Füllkörpers eine definierte Relativlage einnehmen.

Vorzugsweise besteht das Membranelement aus einem Gummimaterial, das durch Vulkanisation eines Rohmaterials erzeugt wurde, mit dem der Füllkörper, quasi vergleichbar einem Formkern, vor der Vulkanisation umhüllt wurde. Auf diese Weise lässt sich die Gestalt der Balgkammer besonders einfach als unmittelbares Formnegativ des Füllkörpers realisieren. Es besteht die vorteilhafte Möglichkeit, individuelle Formgebungen der Balgkammer durch Verwendung eines entsprechend individuell gestalteten Füllkörpers vorzugeben. Als Rohmaterial kommt insbesondere Kautschuk in Frage.

Wenn die beiden sich gegenüberliegenden Stirnwände des Membranelementes scheibenförmig ausgebildet sind, lässt sich eine besonders kurzbauende Balgeinheit verwirklichen, die sich in vorteilhafter Weise als Kurzhub-Aktuator einsetzen lässt, wenn die Wandung des Balgkörpers von mindestens einem mit der Balgkammer kommunizierenden Fluidkanal durchsetzt ist. Mindestens ein Membranelement kann hierbei mindestens einfach gelocht sein.

Bei einer vorteilhaften Ausgestaltung ist in mindestens eine der Stirnwände des Membranelementes der Balgeinheit ein bezüglich des Membranelementes gesondertes, starres Zusatzelement eingebettet. Ein solches Zusatzelement, das beispielsweise aus Metall oder aus einem starren Kunststoffmaterial besteht, kann beispielsweise eine Befestigungsschnittstelle für eine externe Komponente und/oder einen mit der Balgkammer kommunizierenden Fluidkanal definieren. Das mindestens eine Zusatzelement ist zweckmäßigerweise im Zentrum der zugeordneten Stirnwand angeordnet.

Der Füllkörper kann starr oder gummielastisch verformbar ausgebildet sein. Zweckmäßigerweise besteht er aus einem Material, das ein Anhaften an der Innenfläche des gummielastischen Membranelementes verhindert, so dass Relativbewegungen der beiden Stirnwände, die durch alternatives Belüften und Entlüften der Balgkammer hervorrufbar sind, keine Beeinträchtigung erfahren.

In der Außenfläche des Füllkörpers kann mindestens ein Vorsprung und/oder mindestens eine Vertiefung ausgebildet sein. Jedem eventuell vorhandenen Vorsprung liegt eine an der Innenfläche des Membranelementes ausgebildete komplementäre Vertiefung gegenüber, und ebenso ist jeder eventuell vorhandenen Vertiefung ein diesbezüglich komplementärer Vorsprung an der Innenfläche des Membranelementes zugeordnet. Durch eine solche paarweise Zuordnung von Vorsprüngen und Vertiefungen am Füllkörper und am Membranelement ist einerseits gewährleistet, dass sich das Membranelement im drucklosen Zustand der Balgkammer eng an den Füllkörper anschmiegen kann, andererseits jedoch im Falle einer Fluidbeaufschlagung schon bei geringfügiger Auslenkung nicht unerhebliche Zwischenräume entstehen können, die eine optimale Fluidverteilung im Innern der Balgkammer um den Füllkörper herum ermöglichen.

Der Füllkörper kann auch von einer oder mehreren Durchbrechungen durchsetzt sein. Wenn in die Beaufschlagungskammer ein Fluidkanal einmündet, ist der Füllkörper zweckmäßigerweise von einem bezüglich der Mündung des Fluidkanals koaxial ausgerichteten Durchbrechung durchsetzt.

Zur Erzielung kleiner axialer Abmessungen der Balgeinheit ist der Füllkörper zweckmäßigerweise scheibenförmig flach ausgebildet.

Es ist ferner von Vorteil, wenn der Füllkörper nur lose im Innern der Balgkammer angeordnet ist, so dass er bei einer Fluidbeaufschlagung der Balgkammer das Verformungsvermögen des Membranelementes nicht beeinträchtigt.

Mindestens eine Balgeinheit der Balganordnung ist zweckmäßigerweise als fluidbetätigter Aktuator ausgebildet. Er lässt sich beispielsweise als Hubelement einsetzen. Mindestens eine Balgeinheit kann auch als Fluidpumpe ausgebildet sein, bei der durch von außen her erzeugte Relativbewegungen der beiden Stirnwände ein Pumpeffekt im Innern der Balgkammer hervorgerufen werden kann.

Mindestens eine Balgeinheit verfügt zweckmäßigerweise über ein Membranelement, das lediglich zwei sich gegenüberliegende Stirnwände aufweist. Allerdings kann die Balgeinheit prinzipiell auch als Faltenbalg aufgebaut sein, die über mehr als zwei axial aufeinanderfolgend angeordnete Stirnwände verfügt, welche abwechselnd an der inneren und an der äußeren Peripherie verbunden sind, um eine Faltenstruktur zu erhalten.

Durch entsprechende Ausgestaltung lässt sich die Balganordnung in vielfacher Weise für die unterschiedlichsten Anwendungszwecke konzipieren. In allen Fällen bleibt jedoch neben den schon erläuterten Effekten der Vorteil erhalten, dass die Fluidkammer statisch und mithin hermetisch dicht zur Umgebung hin abgedichtet werden kann, so dass ein leckagefreier und auch extrem reibungsarmer Betrieb möglich ist. Trotz der flachen Bauweise ermöglicht die Balgeinheit einen relativ großen Hub, also relativ große axiale Auslenkungen zwischen den sich gegenüberliegenden Stirnwänden.

Einige weitere der möglichen Anwendungen der Balganordnung sollen im Folgenden erwähnt werden. So ist beispielsweise ein Einsatz möglich als Antrieb für Greifersysteme, als Schraubstock, als Stanzpresse, als Spannelement für beliebige Elemente, als Stoßdämpfer, als Quetschventil, als Wagenheber, als Fußpumpe oder als elektrischer Kleinkompressor. Zum Beispiel bei einem Einsatz als Kompressor beziehungsweise Verdichter sind ohne weiteres mehrstufige Bauformen denkbar, indem mehrere Balgeinheiten seriell oder parallel miteinander verschaltet werden. Dies gilt aber auch für alle anderen Anwendungen.

Die der Erfindung zugrundeliegende Aufgabe wird überdies bei einem Verfahren der eingangs genannten Art dadurch gelöst, dass um einen Formkern herum, dessen Gestalt zumindest im Wesentlichen der Negativform der von dem Membranelement begrenzten Bereiche der Balgkammer entspricht, ein Rohmaterial appliziert wird, das anschließend unter Bildung des Membranelementes elastifiziert wird, wobei der Formkern als Füllkörper unverlierbar in der von dem fertiggestellten Membranelement begrenzten Balgkammer verbleibt.

Indem das Membranelement um einen diesbezüglich separaten Formkern herum erzeugt wird, generiert der Formkern die Kontur der Balgkammer in den vom entstehenden Membranelement begrenzten Bereichen, wobei er insofern als Negativform fungiert. Die Gestalt der die Balgkammer begrenzenden Innenfläche des Membranelementes entspricht nach der Fertigstellung des Membranelementes praktisch der äußeren Gestalt des Formkerns, abgesehen von eventuellen geringfügigen Abweichungen, die aufgrund von Materialschwund beim Elastifizieren des Membranelementes auftreten können. Indem der Formkern als Füllkörper in der Balgkammer verbleibt, müssen bei der Gestaltung des Membranelementes keine Öffnungen eingeplant werden, die ein späteres Entnehmen des Formkerns gestatten. Folglich ist man bei der Gestaltung des Membranelementes äußerst variabel. Das Verbleiben des Formkörpers als Füllkörper in der Balgkammer bringt außerdem den Vorteil mit sich, dass unerwünschtes Totvolumen im fluidisch drucklosen Zustand der Balgkammer vermieden wird.

Aufgrund der Nutzung eines Formkerns als Negativform für die herzustellende Balgkammer besteht die vorteilhafte Möglichkeit, die Innenkontur der Balgkammer fertigungstechnisch und festigkeitsmäßig zu optimieren und insbesondere auch große Radien vorzusehen, die die Kerbwirkung herabsetzen und einen langen Dauerbetrieb der Balgeinheit gewährleisten. Es besteht praktisch die Möglichkeit, durch den als unverlierbarer Füllkörper im Membranelement verbleibenden Formkern eine individuell definierte Kontur an der Innenseite des Membranelementes abzubilden. Diese Kontur kann beispielsweise das Verformungsvermögen optimieren, die Lebensdauer steigern, ein Verkleben zwischen sich gegenüberliegenden Wandflächen des Membranelementes verhindern und die bei Innendruckbeaufschlagung wirksame Fläche und mithin erzeugbare Kraft beeinflussen.

Vorzugsweise wird zur Ausbildung des Membranelementes auf ein vulkanisierbares Rohmaterial zurückgegriffen, wobei die Elastifizierung dieses Rohmaterials durch Vulkanisation durchgeführt wird, nachdem das Rohmaterial um den Formkern herum appliziert wurde. Als Rohmaterial wird insbesondere Kautschuk verwendet, das fertiggestellte Membranelement ist dann ein Gummikörper. Das im Rohzustand plastisch verformbare Kautschukmaterial lässt sich optimal an die Außenkontur des Formkerns anlegen und derart andrücken, dass die nach dem Vulkanisieren vorhandene Beaufschlagungskammer ein abgesehen von eventuellem Materialschwund übereinstimmendes Negativ-Ebenbild der Außenkontur des Formkerns ist.

Bei einem vorteilhaften Ablauf des Vulkanisierverfahrens wird ein zuvor gesondert hergestellter Formkern sandwichartig zwischen zwei den Formkern auf axial entgegengesetzten Seiten flankierenden äußeren Rohmaterialschichten platziert, wobei die Querabmessungen von Formkern und Rohmaterialschichten derart aufeinander abgestimmt sind, dass die Rohmaterialschichten den Formkern randseitig, also im Bereich seines Außenumfanges, allseits mit einem Randabschnitt überragen. Jede Rohmaterialschicht ragt folglich mit einem ringförmigen Randabschnitt konzentrisch über den Formkern hinaus. Beim anschließenden Vulkanisieren werden zum einen die an den Stirnflächen des Formkerns anliegenden Bereiche der Rohmaterialschichten elastifiziert und werden zum anderen, bei gleichzeitiger Elastifizierung des Materials, die überstehenden Randabschnitte stoffschlüssig einstückig miteinander verbunden. Hierbei wird zweckmäßigerweise ein außen um die aus Formkern und Rohmaterial bestehende Anordnung herum angesetztes Formgebungswerkzeug verwendet, das das Rohmaterial unter Wärmeeinwirkung verpresst.

Der den späteren Füllkörper bildende Formkern verhindert bei diesem Herstellungsprozess, dass die sich mit Abstand gegenüberliegenden, die späteren Stirnwände bildenden Rohmaterialschichten ebenfalls miteinander verbunden werden. Der Formkern übernimmt also die Funktion eines Trennkörpers.

Zweckmäßigerweise besteht der Formkern aus einem Material, das ein Anhaften des vulkanisierten Materials an seiner Außenfläche verhindert, so dass der Füllkörper praktisch lose von dem Membranelement umschlossen ist. Alternativ könnte vor dem Aufbringen des Rohmaterials auch ein Trennmittel auf der Außenfläche des Formkerns appliziert werden.

Insbesondere wenn eine relativ große Höhe beziehungsweise eine große axiale Länge der Balgkammer gewünscht ist und dementsprechend ein entsprechend hoher Formkern verwendet wird, ist es zweckmäßig, zur Bildung des Membranelementes nicht nur auf zwei stirnseitig am Formkern zu applizierende äußere Rohmaterialschichten zurückzugreifen, sondern zusätzlich auf mindestens eine weitere, ringförmige Rohmaterialschicht, die axial zwischen den äußeren Rohmaterialschichten in einer den Formkern konzentrisch umschließenden Weise angeordnet wird. Beim anschließenden Vulkanisieren verbindet sich jeder Randabschnitt der äußeren Rohmaterialschichten mit der ihm benachbarten ringförmigen Rohmaterialschicht. Sind mehrere ringförmige Rohmaterialschichten vorhanden, verbinden auch diese sich untereinander stoffschlüssig. Das Resultat ist wiederum ein durch Vulkanisation erzeugtes und insbesondere aus Gummimaterial bestehendes einstückiges Membranelement.

Abhängig von der Ausgestaltung und/oder Anwendung der Balgeinheit kann es notwendig oder zweckmäßig sein, eine die Wandung des Membranelementes durchsetzende Durchbrechung vorzusehen. Um dies zu realisieren, wird zweckmäßigerweise auf ein Rohmaterial zurückgegriffen, das bereits mindestens eine Durchbrechung aufweist. Man kann diese Durchbrechung in ein zuvor geschlossenes Rohmaterial einbringen, bevor selbiges am Formkern appliziert wird.

Für gewisse Anwendungen ist es erforderlich oder zweckmäßig, wenn in mindestens eine der Stirnwände des Membranelementes ein diesbezüglich gesondertes Zusatzelement eingebettet ist. Zur Herstellung einer solchen Konfiguration kann in das Rohmaterial in einem im fertiggestellten Zustand eine Stirnwand des Membranelementes bildenden Bereich noch vor dem Elastifizieren ein bevorzugt starres Zusatzelement eingesetzt werden, das nach dem Vorgang des Elastifizierens, insbesondere des Vulkanisierens, zumindest partiell vom Material des Membranelementes umschlossen und festgehalten wird. Ein solches Zusatzelement kann bereits vor dem Einsetzen in das Rohmaterial mit einem mit der späteren Balgkammer kommunizierenden Fluidkanal und/oder mit einer Befestigungsschnittstelle für eine externe Komponente versehen worden sein.

Als Formkern kann ein starres Element oder ein gummielastisches Element vorteilhaft verwendet werden. Als besonders zweckmäßig hat sich ein aus Silikonmaterial bestehender Formkern erwiesen, da derartiges Material sowohl elastisch verformbar ist als auch über Antihafteigenschaften verfügt.

Um eine besondere Strukturierung der die spätere Balgkammer begrenzenden Wandung des Membranelementes zu erzielen, wird zweckmäßigerweise ein Formkern verwendet, der an seiner Außenfläche mindestens einen Vorsprung und/oder mindestens eine Vertiefung aufweist, wobei diese Strukturen als Negativstrukturen in der dem Formkern zugewandten Innenfläche des Rohmaterials abgebildet werden, wobei diese Negativstrukturen auch nach dem Elastifizieren, insbesondere einem Vulkanisieren, erhalten bleiben.

Als Formkern wird insbesondere ein einstückiges Element verwendet, wenngleich prinzipiell auch die Möglichkeit bestünde, auf einen mehrteiligen Formkern zurückzugreifen.

Nachfolgend wird die Erfindung anhand der beiliegenden Zeichnung näher erläutert. In dieser zeigen:
- Figur 1: eine perspektivische Ansicht einer bevorzugten ersten Ausführungsform einer aus einer Balgeinheit bestehendenden Balganordnung,
- Figur 2: die in Figur 1 gezeigt Balgeinheit in einer Seitenansicht,
- Figur 3: die Balgeinheit aus Figur 3 in einem Querschnitt gemäß Schnittlinie III-III,
- Figur 4: den im Innern der Balgeinheit der Figuren 1 bis 3 enthaltenen Füllkörper von einer ersten Stirnseite her,
- Figur 5: den in Figur 4 abgebildeten Füllkörper von einer zweiten Stirnseite her,
- Figur 6: die zur Herstellung der Balgeinheit aus Figuren 1 bis 5 herangezogenen Einzelkomponenten einschließlich des Rohmaterials,
- Figur 7: eine Momentaufnahme des Zustandes des Einlegens der aus Figur 6 ersichtlichen Einzelkomponenten in ein unteres Werkzeugteil eines zum Vulkanisieren verwendeten Formgebungswerkzeuges,
- Figur 8: eine Phase des Herstellungsverfahrens, bei der die vorgenannten Einzelkomponenten in ein unteres Werkzeugteil eingelegt sind und ein oberes Werkzeugteil des Formgebungswerkzeuges noch abgehoben ist,
- Figur 9: die Einzelkomponenten der Balgeinheit in einer Einzeldarstellung, wie sie im in das Formgebungswerkzeug eingesetzten Zustand vorliegen,
- Figur 10: eine Phase des Herstellungsverfahrens, in der bei geschlossenem Formgebungswerkzeug der hier durch Vulkanisation erzeugte Elastifizierungseffekt bereits abgeschlossen ist, so dass die Balgeinheit fertiggestellt ist und entnommen werden kann,
- Figur 11: eine weitere Ausführungsform der Balgeinheit einer Balganordnung in einer perspektivischen Darstellungsweise,
- Figur 12: eine Seitenansicht der Balgeinheit aus Figur 11 und
- Figur 13: einen Querschnitt durch die Balgeinheit der Figuren 11 und 12 gemäß Schnittlinie XIII-XIII aus Figur 11.

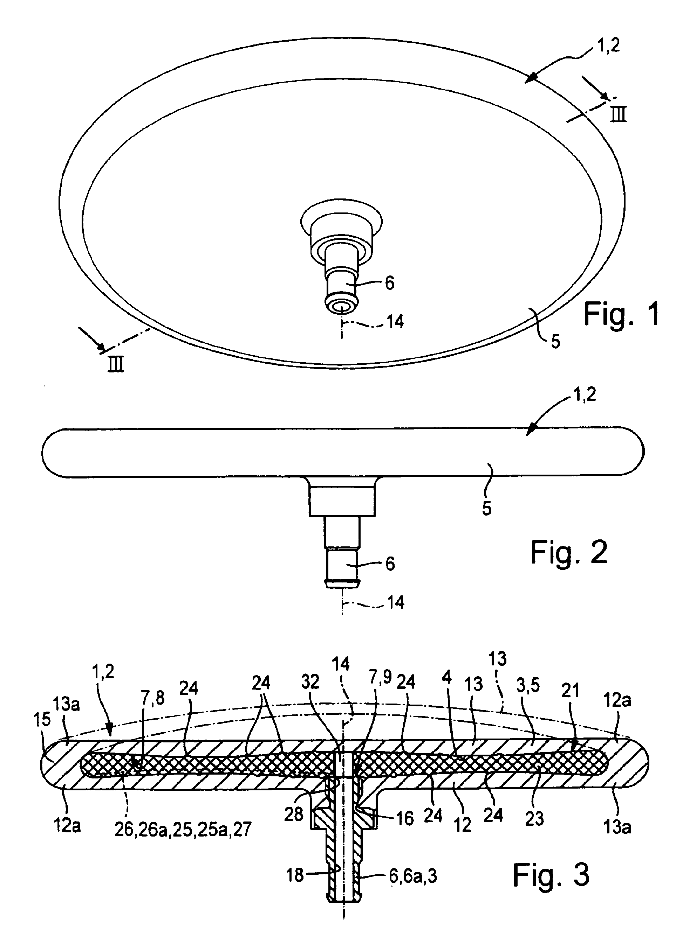

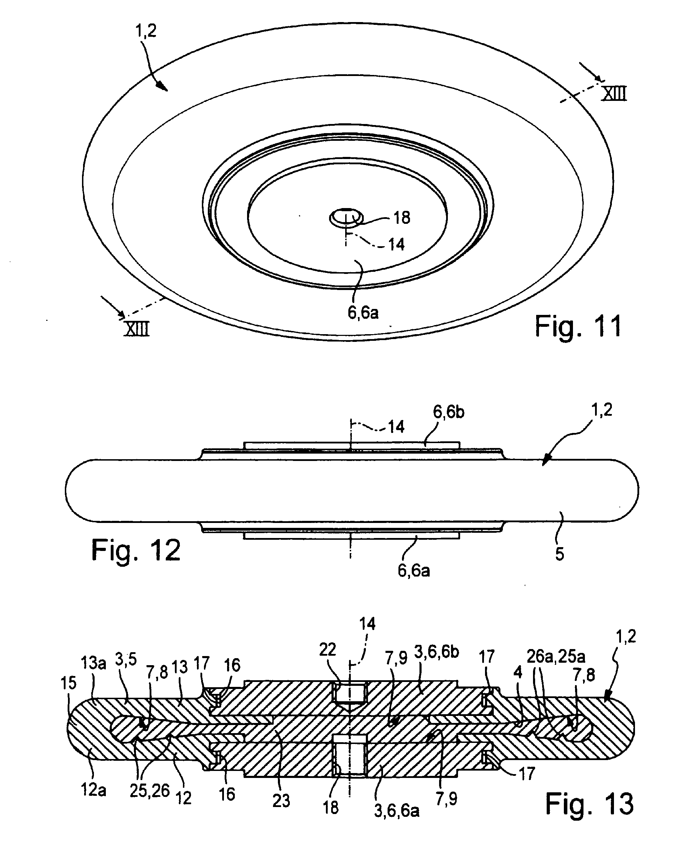

Die Figuren 1 bis 5 einerseits und Figuren 11 bis 13 andererseits zeigen jeweils eine von zwei möglichen Ausführungsformen einer Balgeinheit 2 einer insgesamt mit Bezugsziffer 1 bezeichneten Balganordnung. Bei beiden Ausführungsbeispielen besteht die Balganordnung 1 aus einer einzigen Balgeinheit 2, wobei jedoch festzuhalten ist, dass eine Balganordnung 1 der erfindungsgemäßen Art auch mehrere Balgeinheiten 2 enthalten kann, die beispielsweise mit paralleler und/oder mit serieller Wirkung miteinander kombiniert sind.

Die weiteren Erläuterungen der Balgeinheit 2 beziehen sich, sofern im Einzelfall keine anderen Ausführungen gemacht werden, auf beide illustrierten Ausführungsbeispiele.

Die Balgeinheit 2 verfügt über einen Balgkörper 3, der eine mit Fluid befüllbare Balgkammer 4 umschließt. Die Wandung des die Balgkammer 4 umgrenzenden Balgkörpers 3 ist exemplarisch von mehreren Komponenten gebildet, und zwar zum einen von einem einstückigen, gummielastischen Membranelement 5 und zum anderen von mindestens einem Zusatzelement 6. Beim Ausführungsbeispiel der Figuren 1 bis 5 enthält der Balgkörper 3 nur ein Zusatzelement 6, im Falle des Ausführungsbeispiels der Figuren 11 bis 13 ist er mit zwei Zusatzelementen 6 ausgestattet. Das Membranelement 5 und das mindestens eine Zusatzelement 6 sind bevorzugt unlösbar fest miteinander verbunden.

Bei einer nicht abgebildeten Ausführungsform besteht die die Balgkammer 4 begrenzende Wandung des Balgkörpers 3 ausschließlich aus einem gummielastischen Membranelement 5. Auch bei einer solchen Bauform ist es jedoch möglich, das Membranelement mit einem Zusatzelement zu versehen, ohne damit gleichzeitig eine Begrenzungsfläche der Balgkammer 4 zu definieren.

Die die Balgkammer 4 begrenzende Begrenzungsfläche 7 des Balgkörpers 3 setzt sich in Übereinstimmung mit den vorstehenden Erläuterungen aus der der Balgkammer 4 zugewandten Innenfläche 8 des Membranelementes 5 und der die Balgkammer 4 begrenzenden Innenfläche 9 des mindestens einen Zusatzelementes 6 zusammen.

Das Membranelement 5 verfügt über wenigstens zwei, und bei beiden Ausführungsbeispielen über jeweils genau zwei Stirnwände, die im Folgenden als erste Stirnwand 12 und als zweite Stirnwand 13 bezeichnet seien. Die beiden Stirnwände 12, 13 liegen sich unabhängig vom Aktivierungszustand der Balgeinheit 7 in Achsrichtung einer Längsachse 14 der Balgeinheit 2 mit Abstand gegenüber.

Die beiden Stirnwände 12, 13 haben zweckmäßigerweise eine runde und vorzugsweise - wie aus Figuren 1 und 11 ersichtlich ist - eine kreisrunde Außenkontur. Jede Stirnwand 12, 13 hat mithin einen peripheren Umfangsbereich 12a, 13a, der sich konzentrisch um die Längsachse 14 herum erstreckt.

Zur Definition des gegenseitigen axialen Abstandes zwischen den beiden Stirnwänden 12, 13 verfügt das Membranelement 5 auch noch über eine ringförmige Umfangswand 15, die koaxial zwischen den beiden Stirnwänden 12, 13 angeordnet ist und die mit den peripheren Umfangsbereichen 12a, 13a der beiden Stirnwände 12, 13 jeweils einstückig verbunden ist.

Die beiden Stirnwände 12, 13 und die Umfangswand 15 sind keine individuellen Komponenten des Membranelementes 5, sondern stellen lediglich integrierte Abschnitte des insgesamt einstückigen Membranelementes 5 dar. Aus diesem Grunde sind in Figuren 3 und 13 auch keine Übergangsbereiche zwischen den einzelnen Wänden 12, 13, 15 ersichtlich.

Beim Ausführungsbeispiel der Figuren 1 bis 5 ist in die erste Stirnwand 12 ein bezüglich des Membranelementes 5 separates, insbesondere aus einem starren Material bestehendes Zusatzelement 6 eingebettet, und zwar derart, dass es in einer die erste Stirnwand 12 durchsetzenden Durchbrechung 16 einsitzt. Die Durchbrechung 16 ist insbesondere koaxial zu der Längsachse 14 angeordnet.

Beim Ausführungsbeispiel der Figuren 11 bis 13 ist jede Stirnwand 12, 13 mit einer zur Längsachse 14 koaxialen Durchbrechung 16 versehen, in die jeweils eines der beiden Zusatzelemente 6 eingebettet ist.

Die Einbettung des Zusatzelementes 6 in das Membranelement 5 erfolgt bei beiden Ausführungsbeispielen in einer Weise, dass zwischen dem Material des Membranelementes 5 und dem zugeordneten Zusatzelement 6 ein fluiddichter Kontakt vorliegt. Bei beiden Ausführungsbeispielen ist dies dadurch realisiert, dass das Membranelement 5 an den in die Durchbrechung 16 eingreifenden Bestandteil des Zusatzelementes 6 angeformt ist. Radial hinterschnittene Konturen 17 des Zusatzelementes 6 ermöglichen dabei zweckmäßigerweise, dass das Material des Membranelementes 5 verzahnungsartig in die Außenkontur des Zusatzelementes 6 eingreifen kann, um zusätzlich auch eine in Achsrichtung der Längsachse 14 formschlüssig wirkende Verbindung zu erreichen, die eine besonders hohe Festigkeit garantiert.

Das Zusatzelement 6 kann ohne weiteres nicht unerheblich über die Außenfläche des Membranelementes 5 vorstehen. Dies ist beim Ausführungsbeispiel der Figuren 1 bis 5 der Fall, bei dem das Zusatzelement 6 von einem Anschlusskörper 6a gebildet ist, der von einem in die Balgkammer 4 mündenden Fluidkanal 18 durchsetzt ist und an den sich eine zu einer nicht dargestellten Druckquelle führende Fluidleitung, beispielsweise ein Druckluftschlauch, in bevorzugt lösbarer Weise anschließen lässt. Der Anschlusskörper 6a kann einen nach Art einer Schlauchtülle ausgebildeten Anschlussabschnitt aufweisen, auf den ein Fluidschlauch aufsteckbar ist.

Das Ausführungsbeispiel der Figuren 11 bis 13 illustriert, dass das Zusatzelement 6 durchaus auch nur geringfügig über die Außenfläche des Membranelementes 5 vorstehen kann. Selbst eine bündige oder eine bezüglich der Außenfläche des Membranelementes 5 zurückversetzte Gestaltung eines Zusatzelementes 6 wäre denkbar. Anders als beim Ausführungsbeispiel der Figuren 1 bis 5, bei dem das Zusatzelement 6 länglich gestaltet ist, haben die Zusatzelemente 6 beim Ausführungsbeispiel der Figuren 11 bis 13 eine flache und bevorzugt scheibenförmige Formgebung.

Beim Ausführungsbeispiel der Figuren 11 bis 13 ist das an der ersten Stirnwand 12 fixierte Zusatzelement 6 wiederum als Anschlusskörper 6a konzipiert, der von einem mit der Balgkammer 4 kommunizierenden Fluidkanal 18 durchsetzt ist, durch den hindurch - wie auch beim Ausführungsbeispiel der Figuren 1 bis 5 - ein fluidisches Druckmedium wahlweise in die Balgkammer 4 eingespeist oder aus der Balgkammer 4 abgeführt werden kann. Als Anschlussmittel für eine zu einer Druckquelle führenden Fluidleitung ist der Anschlusskörper 6a mit einem Innengewinde versehen.

In die Verbindung zwischen dem Fluidkanal 18 und der nicht dargestellten Druckquelle ist zweckmäßigerweise eine ebenfalls nicht dargestellte Steuerventileinrichtung zwischengeschaltet, mit deren Hilfe eine gesteuerte Fluidbeaufschlagung der Balgkammer 4 realisierbar ist.

Als Druckmedium für den Betrieb der Balgeinheit kommt vor allem Druckluft in Frage, wenngleich jedes andere fluidische Medium dafür geeignet ist.

Mindestens ein Zusatzelement 6 des Balgkörpers 3 kann als Befestigungskörper 6b ausgebildet sein. Exemplarisch trifft dies auf das zweite Zusatzelement 6 des Ausführungsbeispiels der Figuren 11 bis 13 zu. An diesem Befestigungskörper 6b, der mit einer geeigneten Befestigungsschnittstelle 22 ausgestattet ist, lässt sich eine beliebige externe Komponente bevorzugt lösbar fixieren. Eine solche externe Komponente ist beispielsweise ein zu bewegendes Bauteil oder eine zur Fixierung der Balgeinheit 2 am Einsatzort dienende Haltestruktur.

In den Abbildungen ist die Balgeinheit 2 in einem deaktivierten Grundzustand gezeigt, in dem im Innern der Balgkammer 4 atmosphärischer Druck herrscht. Ein Charakteristikum der beispielsgemäßen Balgeinheiten 2 besteht darin, dass selbige in diesem Grundzustand sehr flach bauen, in Achsrichtung der Längsachse 14 also relativ geringe Abmessungen haben im Vergleich zu ihrem rechtwinkelig zur Längsachse 14 gemessenen Durchmesser. Um eine solche Struktur zu erhalten, sind zweckmäßigerweise beide der sich gegenüberliegenden Stirnwände 12, 13 des Membranelementes 5 scheibenförmig ausgebildet.

Diejenige Stirnwand 12 oder 13, die keine Durchbrechung 16 aufweist, hat die Form einer geschlossenen, undurchbrochenen Scheibe. Befindet sich in einer Stirnwand 12 oder 13 jedoch eine zentrale Durchbrechung 16, hat diese Stirnwand insbesondere die Form einer Ringscheibe.

In der Balgkammer 4 ist in unverlierbarer Weise ein Füllkörper 23 aufgenommen. Der Füllkörper 23 befindet sich in seiner Gesamtheit im Innern der Balgkammer 4 und ragt aus dieser nicht heraus. Eine Besonderheit des Füllkörpers 23 besteht darin, dass seine Gestalt zumindest im Wesentlichen der Negativform der von dem Membranelement 5 begrenzten Bereiche der Balgkammer 4 entspricht. Insofern ist anhand der Figuren 3 und 13 sehr gut zu erkennen, dass die Formgebung der Außenfläche 21 des Füllkörpers 23 - abgesehen von eventuell aufgrund von noch zu erläuternden Schrumpfungsprozessen auftretenden Abweichungen - derjenigen der die Balgkammer 4 begrenzenden Innenfläche 8 des Membranelementes 5 entspricht.

Vorzugsweise ist der Füllkörper 23 so gestaltet, dass er dort, wo er nicht von dem Membranelement 5, sondern von einem anderen Bestandteil des Balgkörpers 3 flankiert ist, in seiner äußeren Gestalt der ihm zugewandten Innenfläche dieses weiteren Bestandteils zumindest im Wesentlichen entspricht. Exemplarisch trifft dies auf die Zusatzelemente 6 zu, deren Innenfläche 9 in ihrer Kontur genau derjenigen des gegenüberliegenden Flächenabschnittes der Außenfläche des Füllkörpers 23 entspricht.

Die vorgenannten Angaben hinsichtlich einander entsprechender Formgebungen von Balgkörper 3 und Füllkörper 23 beziehen sich auf den geschilderten Grundzustand, also auf einen entlüfteten Zustand der Balgkammer 4. Mit anderen Worten ist die Balgkammer 4 im innendrucklosen Grundzustand von dem Füllkörper 23 zumindest zum größten Teil ausgefüllt. Auf diese Weise bildet der Füllkörper 23 eine Art Stützkorsett, das die elastische Struktur des Membranelementes 5 von innen her abstützt und im Grundzustand versteift. Somit kann die Balgeinheit 2 auch im drucklosen Zustand der Balgkammer 4 eine zuverlässige Abstützfunktion bezüglich einer externen Komponente ausüben.

Der Füllkörper 23 ist beim Ausführungsbeispiel der Figuren 1 bis 5 gummielastisch verformbar ausgebildet, während er beim Ausführungsbeispiel der Figuren 11 bis 13 ein starrer, bei den im Betrieb auftretenden Kräften nicht verformbarer Körper ist. Diese Eigenschaften können bei den beiden Ausführungsbeispielen aber auch vertauscht sein. Soweit es sich um einen gummielastisch verformbaren Körper handelt, besteht der Füllkörper 23 insbesondere aus einem Elastomermaterial und zweckmäßigerweise aus einem Silikonmaterial. Ein starrer Füllkörper 23 kann beispielsweise aus einem thermoplastischen Material oder auch aus Metall bestehen.

Entsprechend der bei beiden Ausführungsbeispielen sehr flachen Bauweise des Balgkörpers 3 ist die in Achsrichtung der Längsachse 14 gemessene Höhe der Balgkammer 4 ebenfalls sehr gering. Dementsprechend ist der Füllkörper 23 zweckmäßigerweise scheibenförmig ausgebildet. Es ist ferner von Vorteil, wenn der Füllkörper 23 lose in der Balgkammer 4 angeordnet ist, so dass er in seiner bezüglich des Membranelementes 5 eingenommenen Position lediglich durch den mit dem Membranelement 5 bestehenden Berührkontakt stabilisiert ist. Der Füllkörper 23 ist weder stoffschlüssig mit dem Balgkörper 3 verbunden, noch greift er formschlüssig in das Material des Membranelementes 5 ein.

Die Balgeinheit 2 ist insbesondere als fluidbetätigter Aktuator nutzbar. In diesem Fall wird sie durch die schon erwähnte gesteuerte Fluidbeaufschlagung der Balgkammer 4 betrieben. Durch Einspeisung eines unter atmosphärischen Überdruck stehenden Druckmediums in die Balgkammer 4 verformt sich das Membranelement 5 und werden insbesondere die beiden Stirnwände 12, 13 im Sinne eines gegenseitigen Entfernens nach außen gewölbt. In Figur 3 ist die hierdurch hervorgerufene Auswölbung der zweiten Stirnwand 13 schematisch strichpunktiert angedeutet.

Im derart betätigten Zustand hat sich das Volumen der Balgkammer 4 vergrößert, so dass es insbesondere größer ist als das Volumen des Füllkörpers 23.

Der Füllkörper 23 reduziert das mit Fluid zu füllende Volumen der Balgkammer 4, weil er den im Grundzustand aufgrund der Beabstandung der beiden Stirnwände 12, 13 vorhandenen Leerraum der Balgkammer 4 im Wesentlichen ausfüllt. Auf diese Weise kann der Luftverbrauch und auch die zum Aktivieren des Aktuators benötigte Zeitspanne sehr kurz gehalten werden.

Die Balgeinheit 2 ist alternativ auch als Pumpe oder als Stoßdämpfer verwendbar. Bei einer Verwendung als Pumpe wird durch äußere Krafteinwirkung eine Relativbewegung zwischen den beiden Stirnwänden 12, 13 hervorgerufen, so dass ein Luftansaugeffekt und Luftausstoßeffekt hervorgerufen werden kann. Bei einem Einsatz als Stoßdämpfer wird das Membranelement 5 mit einer gewissen Fluidmenge, insbesondere ein Gas, gefüllt und dann verschlossen. Die Balgeinheit 2 kann dann insbesondere nach Art eines federelastisch nachgiebigen Puffers eingesetzt werden.

Um das Verformungsverhalten des Membranelementes 5 positiv zu beeinflussen, kann die Innenfläche 8 des Membranelementes 5 mit einer Oberflächenstruktur 26 versehen sein. Exemplarisch enthält diese Oberflächenstruktur 26 eine oder mehrere Vertiefungen 24. Diese Vertiefungen 24 sind insbesondere nutförmig ausgebildet. Besonders empfiehlt sich eine ringförmige Gestaltung mit zur Längsachse 14 konzentrischer Anordnung, wobei die Möglichkeit besteht, an mindestens einer und zweckmäßigerweise an beiden Stirnwänden 12, 13 mehrere mit radialem Abstand zueinander angeordnete und hierbei konzentrisch zueinander platzierte Vertiefungen 24 vorzusehen.

Zusätzlich oder alternativ kann die an der Innenfläche 8 des Membranelementes 5 ausgebildete Oberflächenstruktur 26 auch mit einem oder mehreren, in die Balgkammer 4 hineinragenden Vorsprüngen 25 versehen sein, die vorzugsweise auch konzentrisch bezüglich der Längsachse 14 angeordnet sind. Auch diese Vorsprünge 25 können insbesondere dazu dienen, das Verformungsverhalten der elastischen Wandung des Membranelementes 5 zu optimieren.

Die Oberflächenstruktur 26 bzw. sowohl die mindestens eine Vertiefung 24 als auch der mindestens eine Vorsprung 25 befinden sich zweckmäßigerweise an der ersten Stirnwand 12 und/oder an der zweiten Stirnwand 13.

Indem der Füllkörper 23 die Negativform der Balgkammer 4 bildet, ist der Füllkörper 23 an seiner Außenfläche 21 mit einer Oberflächenstruktur 26a versehen, die komplementär zu der an der Innenfläche 8 des Membranelementes 5 vorhandenen Oberflächenstruktur 26 ausgebildet ist. Exemplarisch besteht diese Oberflächenstruktur 26a des Füllkörpers 23 aus Vorsprüngen 24a und Vertiefungen 25a, die jeweils komplementär zu den Vertiefungen 24 und Vorsprüngen 25 des Membranelementes 5 ausgebildet sind und diesen gegenüberliegen. Mithin greifen im Grundzustand der Balgeinheit 2 die einander paarweise zugeordneten Vertiefungen und Vorsprünge 24, 24a; 25, 25a ineinander ein, wobei die jeweils einerseits angeordneten Vorsprünge 25, 24a die jeweils andererseits angeordneten Vertiefungen 24, 25a zweckmäßigerweise ausfüllen.

Die im Folgenden zusammengefasst als Oberflächenstrukturen 26 bezeichneten Vertiefungen und/oder Vorsprünge 24, 25 des Membranelementes 5 befinden sich zweckmäßigerweise an der Innenfläche einer oder beider Stirnwände 12, 13. Die im Folgenden zusammengefasst als Oberflächenstrukturen 26a bezeichneten Vorsprünge und Vertiefungen 24a, 25a des Füllkörpers 23 sind zweckmäßigerweise an den in Achsrichtung der Längsachse 14 orientierten Stirnflächen 21a, 21b des Füllkörpers 23 ausgebildet.

Die beiden Oberflächenstrukturen 26, 26a können aufgrund entsprechend komplementärer Gestaltung von Vorsprüngen und Vertiefungen 24, 24a; 25, 25a auch zur Ausbildung von mindestens einer Fluidverteilnut 27 dienen, die eine optimierte Verteilung des zum Betreiben der Balgeinheit 2 eingespeisten Druckmediums beiträgt. Eine oder mehrere solcher Fluidverteilnuten 27 können sich ausgehend von einem Bereich, der der in die Balgkammer 4 ausmündenden Öffnung 28 eines Fluidkanals 18 zugeordnet ist, zu radial weiter außen liegenden Bereichen hin erstrecken. Durch die Öffnung 28 in die Balgkammer 4 eintretendes Druckmedium ist somit in der Lage, sich problemlos zwischen den Stirnwänden 12, 13 und den diesen gegenüberliegenden Stirnflächen 21a, 21b des Füllkörpers 23 großflächig zu verteilen.

Es ist auch vorteilhaft, wenn der Füllkörper 23 mindestens eine axial durchgehende Durchbrechung 32 aufweist, die dem auf nur einer axialen Seite des Füllkörpers 23 eingespeisten Druckmedium die Möglichkeit bietet, mit kurzer Wegstrecke auf die entgegengesetzte Seite des Füllkörpers 23 zu gelangen. Mindestens eine solche Durchbrechung 32 ist zweckmäßigerweise fluchtend zur Öffnung 28 des Fluidkanals 18 angeordnet. Die Fluidverteilnuten 27 können so platziert sein, dass sie mit einer Stirnseite in die Durchbrechung 32 ausmünden. Es besteht ferner die vorteilhafte Möglichkeit, die Fluidverteilnuten 27 nach Art von Radialstrahlen so anzuordnen, dass sie sich mit Bezug zur Längsachse 14 in radialer Richtung erstrecken.

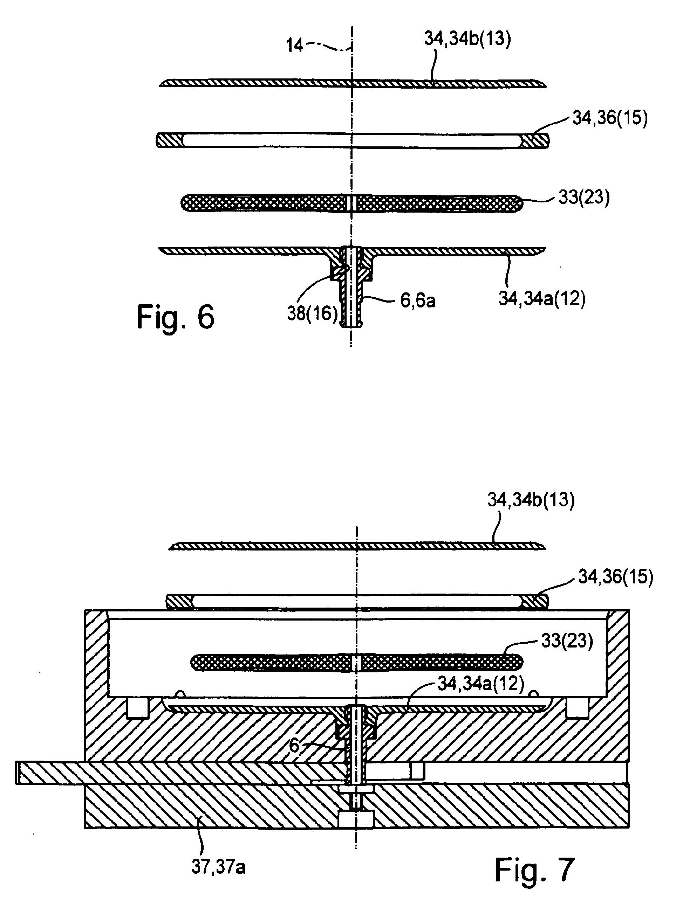

Nachfolgend wird beschrieben, wie sich Balgeinheiten 2 der vorstehend erläuterten Art in vorteilhafter Weise kostengünstig herstellen lassen. Hierzu wird unter anderem auf die in Figuren 6 bis 10 abgebildeten Verfahrensschritte Bezug genommen.

Der Grundgedanke eines besonders vorteilhaften Herstellungsverfahrens besteht darin, um einen Formkern 33 herum ein Rohmaterial 34 zu applizieren, das anschließend unter Bildung des Membranelementes 5 elastifiziert wird, wobei der Formkern 33 unter Bildung des Füllkörpers 23 unverlierbar in der von dem fertiggestellten Membranelement 5 begrenzten Balgkammer 35 verbleibt. Der hierbei verwendete Formkern 33 hat eine Gestalt, die zumindest im Wesentlichen der Negativform der von dem Membranelement 5 nach seiner Elastifizierung beziehungsweise Fertigstellung begrenzten Bereiche der Balgkammer 4 entspricht.

Auf diese Weise ergibt sich letztlich eine Balgeinheit 2, die den weiter oben geschilderten Aufbau hat, wobei sich ein nachstehend im Detail beschriebener vorteilhafter Verfahrensablauf an der Herstellung einer Balgeinheit 2 orientiert, wie sie aus Figuren 1 bis 5 hervorgeht.

Grundsätzlich ist zu dem Verfahren zu sagen, dass das Rohmaterial prinzipiell auf unterschiedliche Art und Weise um den Formkern 33 herum platzierbar ist und auch verschiedene, insbesondere von der Art des Rohmaterials abhängende Möglichkeiten bestehen, um aus dem Rohmaterial die gummielastische Wandung des Membranelementes zu erzeugen, also die Elastifizierung vorzunehmen. Eine Möglichkeit besteht darin, durch Spritzgießen das durch Erhitzung verflüssigte Rohmaterial eines Elastomer-Kunststoffes zu applizieren, das nach dem Erkalten über gummieelastische Eigenschaften verfügt. Ebenso könnte ein Kunststoff-Rohmaterial in einer Pressform um den zuvor eingelegten Formkern herum appliziert und durch Wärmeeinwirkung in die gewünschte Form gebracht werden, wobei auch hier ein Kunststoffmaterial verwendet wird, das nach dem "Aushärten" über elastomere Eigenschaften verfügt.

Bei dem im Folgenden erläuterten und besonders vorteilhaften Herstellungsverfahren wird zum Hervorrufen der Elastifizierung auf das als solches bekannte Verfahren der Vulkanisation zurückgegriffen, bei dem als Ausgangsstoff für das Membranelement ein vulkanisierbares Rohmaterial verwendet wird, das durch die beim Vulkanisieren stattfindenden Vorgänge in ein Gummimaterial "umgewandelt" wird.

Bei diesem vorteilhaften Verfahren wird zunächst ein Formkern 33 bereitgestellt, der identisch ist mit dem gewünschten Füllkörper 23. Der Formkern 33 wird separat in einem eigenständigen Herstellungsverfahren produziert und verfügt über die weiter vorne bereits beschriebenen Materialeigenschaften. Exemplarisch hat der bereitgestellte Formkern 33 eine scheibenförmige Gestalt mit kreisrundem Außendurchmesser und besteht aus einem Material mit gummielastischen Eigenschaften, insbesondere aus Silikonkunststoff.

Dieser Formkern 33 erfährt bei den nachfolgenden Bearbeitungsschritten keinerlei strukturelle Änderung mehr. Es ändert sich lediglich seine Funktion von derjenigen eines Formkerns 33 in diejenige eines Füllkörpers 23 im Innern eines Balgkörpers 3.

Der derart bereitgestellte Formkern 33 wird sandwichartig zwischen zwei äußeren Rohmaterialschichten 34a, 34b des schon erwähnten Rohmaterials 34 platziert. Diese äußeren Rohmaterialschichten 34a, 34b bilden nach der sich anschließenden Vulkanisation die erste und zweite Stirnwand 12, 13 des Membranelementes 5.

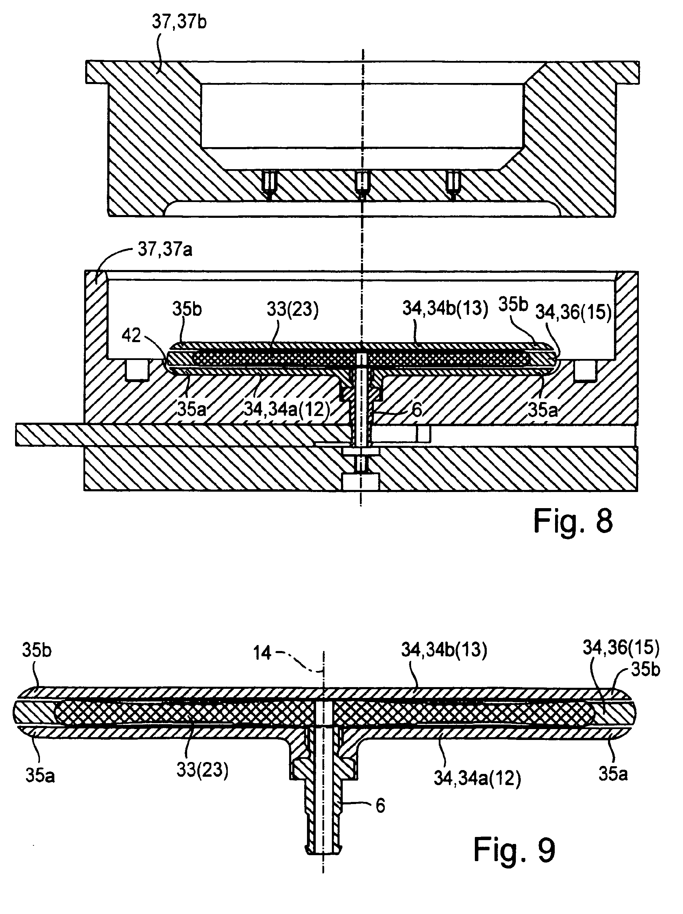

Die rechtwinkelig zur Längsachse 14 gemessenen Abmaße der äußeren Rohmaterialschichten 34a, 34b sind größer als die entsprechend gemessenen Maße des Formkerns 33. Wenn daher, wie dies aus Figuren 8 und 9 ersichtlich ist, der Formkern 33 zwischen den beiden äußeren Rohmaterialschichten 34a, 34b liegt, wird der Formkern 33 von jeder Rohmaterialschicht 34a, 34b randseitig jeweils ringsum von einem ringförmigen Randabschnitt 35a, 35b radial überragt.

Das zu applizierende Rohmaterial 34 umfasst zweckmäßigerweise zusätzlich zu den beiden äußeren Rohmaterialschichten 34a, 34b eine diesbezüglich separate, ringförmige Rohmaterialschicht 36, die in einer gemeinsamen Ebene mit dem Formkern 33 ebenfalls zwischen den beiden äußeren Rohmaterialschichten 34a, 34b angeordnet wird. Die derart angeordnete ringförmige Rohmaterialschicht 36 umschließt den Formkern 33 konzentrisch und flankiert ihn somit ringsum an seiner radialen Außenseite. Der Innendurchmesser der ringförmigen Rohmaterialschicht 36 entspricht dabei dem Außendurchmesser des Formkerns 33.

Die in Achsrichtung der Längsachse 14 gemessene Dicke der ringförmigen Rohmaterialschicht 36 entspricht zweckmäßigerweise derjenigen des Formkerns 33, kann aber insbesondere auch etwas geringer ausfallen.

Die erwähnten Rohmaterialschichten 34a, 34b, 36 und der Formkern 33 werden in einer dem herzustellenden Balgkörper 3 strukturell im Wesentlichen entsprechenden Zuordnung in ein Formgebungswerkzeug 37 eingelegt. Vor oder nach dem Einlegen in das Formgebungswerkzeug 37 wird ein eventuell gewünschtes Zusatzelement 6 an der gewünschten Stelle in das Rohmaterial 34 eingesetzt.

Exemplarisch wird hierzu in nicht weiter gezeigter Weise eine der späteren Durchbrechung 16 entsprechende Durchbrechung 38 im zentralen Bereich der später die erste Stirnwand 12 bildenden ersten äußeren Rohmaterialschicht 34a eingebracht, in die, insbesondere noch vor dem Einsetzen in das Formgebungswerkzeug 37, ein beispielsweise von einem Anschlusskörper 6a gebildetes Zusatzelement 6 eingesetzt wird.

Eventuell gewünschte weitere Zusatzelemente 6 können in gleicher Weise an der jeweils gewünschten Stelle in eine der Rohmaterialschichten 34a, 34b, 36 eingesetzt werden.

Dieses Einsetzen ist problemlos möglich, weil das Rohmaterial vor dem Vulkanisieren noch sehr leicht plastisch verformbar ist und sich in jegliche erdenkliche Gestalt formen lässt.

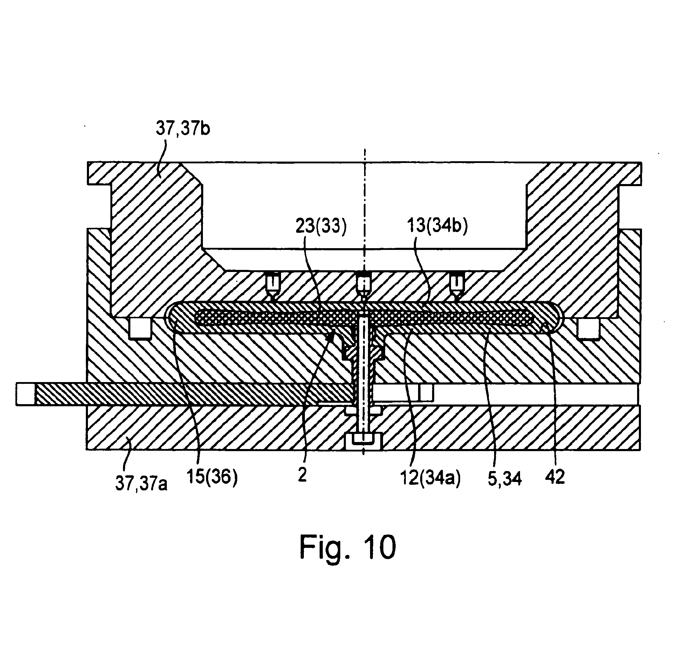

Das beim Vulkanisieren zum Einsatz kommende Formgebungswerkzeug 37 ist zweckmäßigerweise mehrteilig ausgebildet und verfügt exemplarisch über ein insbesondere unten angeordnetes erstes Werkzeugteil 37a und ein oberhalb des ersten Werkzeugteils 37a angeordnetes zweites Werkzeugteil 37b. Das Formgebungswerkzeug 37 kann in eine aus Figur 10 ersichtliche geschlossene Betriebsstellung verbracht werden, in der die beiden Werkzeugteile 37a, 37b derart miteinander in Eingriff stehen, dass sie gemeinsam eine Formgebungskammer 42 definieren. Jedes Werkzeugteil 37a, 37b bildet einen Bestandteil der Begrenzungsfläche dieser Formgebungskammer 42.

Die zur Bildung der Balgeinheit 2 verwendeten Komponenten - exemplarisch also der Formkern 33, die Rohmaterialschichten 34a, 34b, 36 und das Zusatzelement 6 - werden zweckmäßigerweise in einer dem fertigen Balgkörper 3 entsprechenden Konfiguration in den im ersten Werkzeugteil 37a ausgebildeten Bestandteil der Formgebungskammer 42 eingelegt - dieser Zustand ist in Figur 8 gezeigt -, worauf die Formgebungskammer 42 durch Zusammenführen der beiden Werkzeugteile 37a, 37b geschlossen wird. Durch anschließendes Verpressen der Balgkörperkomponenten zwischen den beiden Formgebungswerkzeugen 37 unter gleichzeitiger Erhitzung wird der Vulkanisationsprozess ausgelöst, der zur Folge hat, dass sich aus den diversen Rohmaterialschichten 34a, 34b, 36 ein das Membranelement 5 definierender einstückiger elastischer Gummikörper bildet.

Bei dem Prozess der Vulkanisation werden die sich in Achsrichtung der Längsachse 14 gegenüberliegenden Randabschnitte 35a, 35b der äußeren Rohmaterialschichten 34a, 34b unter Vermittlung der dazwischenliegenden ringförmigen Rohmaterialschicht 36 stoffschlüssig zu dem angestrebten einstückigen Gummielement beziehungsweise Membranelement verbunden. Im fertiggestellten Zustand definiert dabei die ringförmige Rohmaterialschicht 36 die Umfangswand 15 des Membranelementes 5.

Die axiale Höhe der ringförmigen Rohmaterialschicht 36 wird entsprechend der axialen Dicke des gewünschten Füllkörpers 23 gewählt. Wenn der Füllkörper 23 besonders dick sein soll, können anstelle eines einzigen ringförmigen Rohmaterialabschnittes 36 auch mehrere solcher ringförmiger Rohmaterialabschnitte 36 axial aufeinanderfolgend zwischen den ringförmigen Randabschnitten 35a, 35b der äußeren Rohmaterialschichten 34a, 34b platziert werden.

Insbesondere dann, wenn der Füllkörper 23 beziehungsweise der diesen bildende Formkern 33 eine nur geringe Dicke in der Achsrichtung der Längsachse 14 aufweist, kann auf die ringförmige Rohmaterialschicht 36 auch verzichtet werden, so dass dann die sich gegenüberliegenden Randabschnitte 35a, 35b direkt miteinander verbunden und vulkanisiert werden.

Nach Abschluss des Vulkanisationsprozesses wird das Formgebungswerkzeug 37 geöffnet und die fertiggestellte Balgeinheit 2 kann zur bestimmungsgemäßen Verwendung entnommen werden.

Durch den eingelegten Formkern 33 wird beim Vulkanisationsprozess die gewünschte körperliche Trennung zwischen den beiden Stirnwänden 12, 13 in dem die Balgkammer 4 begrenzenden Bereich gewährleistet. Der Formkern 33 verhindert, dass die äußeren Rohmaterialschichten 34a, 34b in den zwischen den Randabschnitten 35a, 35b liegenden Bereichen, die später die Stirnwände 12, 13 bilden, ebenfalls miteinander verbunden werden. Diese Bereiche werden also lediglich vulkanisiert und dabei aus dem bis dahin vorliegenden plastischen Zustand in den elastischen Zustand überführt.

Es ist leicht einsichtig, dass man durch entsprechende Gestaltung des Formkerns 33 auf die Innenkontur der herzustellenden Balgkammer 4 Einfluss nehmen kann. Durch entsprechende Gestaltung des Formkerns 33 kann eine Balgkammer 4 mit individuell definierter Kontur ausgebildet werden. Man kann dadurch beispielsweise das Volumen der Balgkammer 4 vorgeben. Außerdem und insbesondere kann aber auch der Verlauf und die Gestaltung der Innenfläche 8 des Membranelementes 5, die die Balgkammer 4 umgrenzt, nach Bedarf geformt und insbesondere optimiert werden.

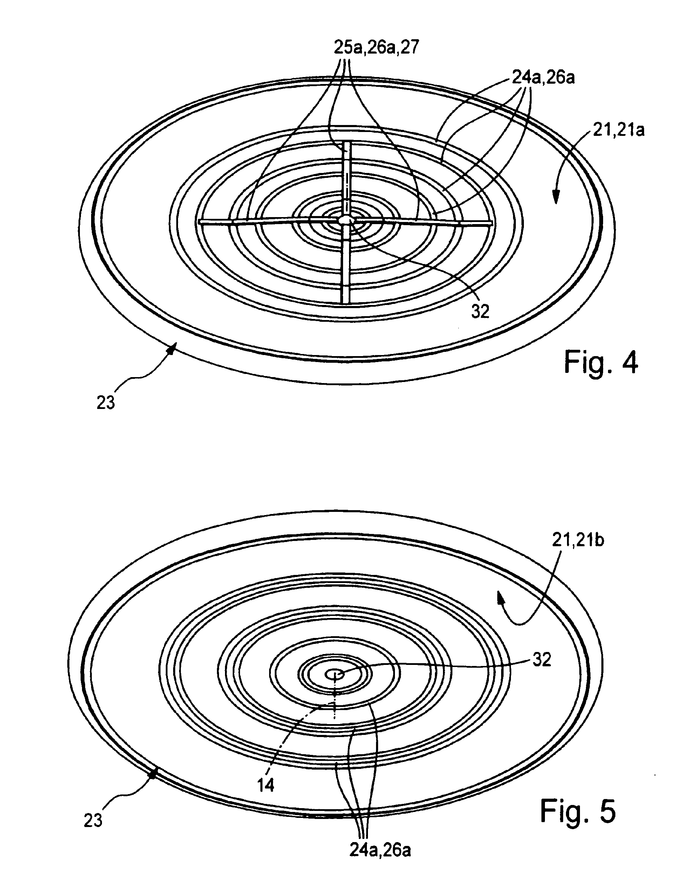

Um beispielsweise an der Innenfläche der Stirnwände 12, 13 die weiter oben geschilderte Oberflächenstruktur 26 - insbesondere Vertiefungen 24 und/oder Vorsprünge 25 - auszubilden, kann der Formkern 33 in der beispielsweise aus Figuren 4 und 5 ersichtlichen Weise mit einer diesbezüglich komplementären Oberflächenstruktur 26a - insbesondere ebenfalls Vorsprünge 24a und/oder Vertiefungen 25a - versehen sein. Beim Vorgang des Vulkanisierens schmiegt sich das Rohmaterial 34 an die Außenfläche 21 des den späteren Füllkörper 23 bildenden Formkerns 33 an und bildet beziehungsweise formt dessen Außenkontur als Negativkontur an der Innenfläche 8 des zu bildenden Membranelementes 5 ab.

Wie man beispielsweise den Figuren 3, 9 und 13 sehr gut entnehmen kann, lässt sich die Innenfläche 8 mit dem geschilderten Verfahren in den Übergangsbereichen zwischen den Stirnwänden 12, 13 und der Umfangswand 15 mit relativ großem Radius ausführen, so dass die beim späteren Betrieb beim Verformen der Stirnwände 12, 13 auftretende Kerbwirkung sehr gering und die Gefahr einer Rissbildung in dem Gummiwerkstoff minimal ist.

Die Verwendung eines Silikonmaterials für den Formkern 33 hat den Vorteil, dass aufgrund der inhärenten Antihafteigenschaften auch ohne Zugabe eines Trennmittels gewährleistet werden kann, dass das Rohmaterial 34 beim Vulkanisiervorgang an dem Formkern 33 nicht festklebt. Selbstverständlich kann unabhängig vom Material des Formkerns 33 vor der diesbezüglichen Applikation des Rohmaterials 34 ein Trennmittel auf den Formkern 33 aufgebracht und insbesondere aufgesprüht werden.

## Patentansprüche

1. Balganordnung, mit mindestens einer Balgeinheit (2), die einen eine mit Fluid befüllbare Balgkammer (4) umschließenden Balgkörper (3) aufweist, dessen Wandung zumindest partiell von einem einstückigen, gummielastischen Membranelement (5) gebildet ist, das wenigstens zwei sich in Achsrichtung einer Längsachse (14) der Balgeinheit (2) mit Abstand gegenüberliegende Stirnwände (12, 13) und eine die beiden Stirnwände (12, 13) peripher verbindende Umfangswand (15) aufweist, **dadurch gekennzeichnet, dass** die Balgeinheit (2) einen unverlierbar in der Balgkammer (4) angeordneten und bezüglich des Balgkörpers (3) separaten Füllkörper (23) aufweist, dessen Gestalt zumindest im Wesentlichen der Negativform der von dem Membranelement (5) begrenzten Bereiche der Balgkammer (4) entspricht.

2. Balganordnung nach Anspruch 1, **dadurch gekennzeichnet, dass** das Membranelement (5) aus einem nach dem Umhüllen des Füllkörpers (23) mit vulkanisierbarem Rohmaterial (34) durch Vulkanisation erzeugten Gummimaterial besteht.

3. Balganordnung nach Anspruch 1 oder 2, **dadurch gekennzeichnet, dass** die beiden sich gegenüberliegenden Stirnwände (12, 13) des Membranelements (5) scheibenförmig ausgebildet sind.

4. Balganordnung nach einem der Ansprüche 1 bis 3, **dadurch gekennzeichnet, dass** die Wandung des Balgkörpers (3) von mindestens einem mit der Balgkammer (4) kommunizierenden Fluidkanal (18) durchsetzt ist.

5. Balganordnung nach einem der Ansprüche 1 bis 4, **dadurch gekennzeichnet, dass** in mindestens eine der beiden Stirnwände (12, 13) des Membranelementes (5) ein bezüglich des Membranelementes (5) gesondertes Zusatzelement (6) eingebettet ist, wobei mindestens ein Zusatzelement (6) zweckmäßigerweise einen mit der Balgkammer (4) kommunizierenden Fluidkanal (18) und/oder eine Befestigungsschnittstelle (22) für eine externe Komponente definiert.

6. Balganordnung nach einem der Ansprüche 1 bis 5, **dadurch gekennzeichnet, dass** der Füllkörper (23) starr oder gummielastisch verformbar ausgebildet ist.

7. Balganordnung nach einem der Ansprüche 1 bis 6, **dadurch gekennzeichnet, dass** in der Außenfläche (21) des Füllkörpers (23) und in der die Balgkammer (4) begrenzenden Innenfläche (8) des Membranelements (5) einander paarweise zugeordnete und zueinander komplementäre Oberflächenstrukturen (26, 26a) ausgebildet sind, insbesondere in Gestalt zueinander komplementärer Vorsprünge (25, 24a) und Vertiefungen (24, 25a).

8. Balganordnung nach einem der Ansprüche 1 bis 7, **dadurch gekennzeichnet, dass** der Füllkörper (23) scheibenförmig ausgebildet ist und/oder lose im Innern der Balgkammer (4) angeordnet ist.

9. Balganordnung nach einem der Ansprüche 1 bis 8, **dadurch gekennzeichnet, dass** mindestens eine Balgeinheit (2) einen fluidbetätigten Aktuator und/oder eine Pumpe und/oder einen Stoßdämpfer bildet.

10. Verfahren zur Herstellung einer Balgeinheit (2), die einen eine mit Fluid befüllbare Balgkammer (4) umschließenden Balgkörper (3) aufweist, dessen Wandung zumindest partiell von einem einstückigen, gummielastischen Membranelement (5) gebildet ist, das wenigstens zwei sich in Achsrichtung einer Längsachse (14) der Balgeinheit (2) mit Abstand gegenüberliegende Stirnwände (12, 13) und eine die Stirnwände (12, 13) peripher verbindende Umfangswand (15) aufweist, **dadurch gekennzeichnet, dass** um einen Formkern (33) herum, dessen Gestalt zumindest im Wesentlichen der Negativform der von dem Membranelement (5) begrenzten Bereiche der Balgkammer (4) entspricht, ein Rohmaterial (34) appliziert wird, das anschließend unter Bildung des Membranelementes (5) elastifiziert wird, wobei der Formkern (33) als Füllkörper (23) unverlierbar in der von dem fertiggestellten Membranelement (5) begrenzten Balgkammer (4) verbleibt.

11. Verfahren nach Anspruch 10, **dadurch gekennzeichnet, dass** als Rohmaterial (34) ein vulkanisierbares Material, insbesondere Kautschuk, verwendet wird, wobei die Elastifizierung durch Vulkanisation durchgeführt wird.

12. Verfahren nach Anspruch 10 oder 11, **dadurch gekennzeichnet, dass** der bevorzugt scheibenförmig ausgebildete Formkern (33) sandwichartig zwischen zwei äußeren Rohmaterialschichten (34a, 34b) des Rohmaterials (34) platziert wird, die den Formkern (33) jeweils randseitig ringsum mit einem Randabschnitt (35a, 35b) überragen, wobei bei einer anschließenden Vulkanisation die Randabschnitte (35a, 35b) der beiden äußeren Rohmaterialschichten (34a, 34b) stoffschlüssig miteinander verbunden werden.

13. Verfahren nach Anspruch 12, **dadurch gekennzeichnet, dass** vor dem Vulkanisieren zwischen den Randabschnitten (35a, 35) der beiden äußeren Rohmaterialschichten (34a, 34b) mindestens eine diesbezüglich separate, ringförmige Rohmaterialschicht (36) in einer den Formkern (33) konzentrisch umschließenden Weise platziert wird, wobei bei der anschließenden Vulkanisation die Randabschnitte (35a, 35b) der äußeren Rohmaterialschichten (34a, 34b) und die mindestens eine ringförmige Rohmaterialschicht (36) stoffschlüssig miteinander verbunden werden.

14. Verfahren nach einem der Ansprüche 10 bis 13, **dadurch gekennzeichnet, dass** das verwendete Rohmaterial (34) mindestens eine Durchbrechung (38) aufweist.

15. Verfahren nach einem der Ansprüche 10 bis 14, **dadurch gekennzeichnet, dass** in das Rohmaterial (34) in einem im fertiggestellten Zustand eine Stirnwand (12, 13) des Membranelementes (5) bildenden Bereich vor dem Elastifizieren ein bevorzugt starres Zusatzelement (6) eingesetzt wird, das zweckmäßigerweise einen mit der Balgkammer (4) kommunizierenden Fluidkanal (18) und/oder eine Befestigungsschnittstelle (22) für eine externe Komponente definiert.

16. Verfahren nach einem der Ansprüche 10 bis 15, **dadurch gekennzeichnet, dass** als Formkern (33) ein starres oder ein gummielastisches Element verwendet wird.

17. Verfahren nach einem der Ansprüche 10 bis 16, **dadurch gekennzeichnet, dass** ein Formkern (33) verwendet wird, der an seiner Außenfläche eine insbesondere von mindestens einem Vorsprung (24a) und/oder von mindestens einer Vertiefung (25a) gebildete Oberflächenstruktur (26a) aufweist, die unter Bildung einer komplementären Oberflächenstruktur (26) als Negativ in der dem Formkern (33) zugewandten Innenfläche des Rohmaterials (34) abgebildet wird.

## Claims

1. Bellows arrangement, comprising at least one bellows unit (2) having a bellows body (3) enclosing a bellows chamber (4) which can be filled with fluid, its wall being at least partially represented by a single-piece, rubber-elastic diaphragm element (5) which comprises at least two end walls (12, 13) located at a distance opposite one another in the axial direction of a longitudinal axis (14) of the bellows unit (2) and a circumferential wall (15) which peripherally joins the two end walls (12, 13), **characterised in that** the bellows unit (2) comprises a filler body (23) which is captively located in the bellows chamber (4) and separate from the bellows body (3) and the shape of which substantially corresponds to the negative shape of the regions of the bellows chamber (4) which are bounded by the diaphragm element (5).

2. Bellows arrangement according to claim 1, **characterised in that** the diaphragm element (5) consists of a rubber material produced by vulcanisation after the filler body (23) has been covered with a vulcanisable raw material.

3. Bellows arrangement according to claim 1 or 2, **characterised in that** the two opposite end walls (12, 13) of the diaphragm element (5) are disc-shaped in design.

4. Bellows arrangement according to any of claims 1 to 3, **characterised in that** at least one fluid passage (18) communicating with the bellows chamber (4) passes through the wall of the bellows body (3).

5. Bellows arrangement according to any of claims 1 to 4, **characterised in that** an additional element (6) separate from the diaphragm element (5) is embedded in at least one of the two end walls (12, 13) of the diaphragm element (5), at least one additional element (6) expediently defining a fluid passage (18) communicating with the bellows chamber (4) and/or a mounting interface (22) for an external component.

6. Bellows arrangement according to any of claims 1 to 5, **characterised in that** the filler body (23) is rigid or deformable in a rubber-elastic way.

7. Bellows arrangement according to any of claims 1 to 6, **characterised in that** paired and mutually complementary surface structures (26, 26a), in particular in the form of complementary projections (25, 24a) and recesses (24, 25a), are provided in the outer surface (21) of the filler body (23) and in the inner surface (8) of the diaphragm element (5) which bounds the bellows chamber (8).

8. Bellows arrangement according to any of claims 1 to 7, **characterised in that** the filler body (23) is disc-shaped and/or loosely arranged in the interior of the bellows chamber (4).

9. Bellows arrangement according to any of claims 1 to 8, **characterised in that** at least one bellows unit (2) forms a fluid-operated actuator and/or a pump and/or a shock absorber.

10. Method for producing a bellows unit (2) having a bellows body (3) enclosing a bellows chamber (4) which can be filled with fluid, its wall being at least partially represented by a single-piece, rubber-elastic diaphragm element (5) which comprises at least two end walls (12, 13) located at a distance opposite one another in the axial direction of a longitudinal axis (14) of the bellows unit (2) and a circumferential wall (15) which peripherally joins the two end walls (12, 13), **characterised in that** a raw material (34) is applied around a mould core (33) the shape of which at least substantially corresponds to the negative shape of the regions of the bellows chamber (4) which are bounded by the diaphragm element (5), which raw material is then elasticised while forming the diaphragm element (5), the mould core (33) remaining captive in the bellows chamber (4) bounded by the finished diaphragm element (5) to act as a filler body (23).

11. Method according to claim 10, **characterised in that** a vulcanisable material, in particular rubber, is used as raw material, the elasticising being carried out by vulcanisation.

12. Method according to claim 10 or 11, **characterised in that** the preferably disc-shaped mould core (33) is sandwiched between two outer raw material layers (34a, 34b) of the raw material (34) which project with an edge section (35a, 35b) each beyond the edge of the mould core (33) along its entire circumference, wherein the edge sections (35a, 35b) of the two outer raw material layers (34a, 34b) are joined to one another by adhesive force in a subsequent vulcanisation process.

13. Method according to claim 12, **characterised in that**, prior to vulcanisation, at least one annular raw material layer (36) which is separate from the two outer raw material layers (34a, 34b) is placed between the edge sections (35a, 35b) of the two outer raw material layers (34a, 34b) in an arrangement which concentrically surrounds the mould core (33), wherein the edge sections (35a, 35b) of the outer raw material layers (34a, 34b) and the at least one annular raw material layer (36) are joined to one another by adhesive force in a subsequent vulcanisation process.

14. Method according to any of claims 10 to 13, **characterised in that** the raw material (34) used has at least one aperture (38).

15. Method according to any of claims 10 to 14, **characterised in that** a preferably rigid additional element (6), which expediently defines a fluid passage (18) communicating with the bellows chamber (4) and/or a mounting interface (22) for an external component, is installed into a region of the raw material (34) which in the finished state forms an end wall (12, 13) of the diaphragm element (5) prior to the elasticising process.

16. Method according to any of claims 10 to 15, **characterised in that** a rigid or rubber-elastic element is used as a mould core (33).

17. Method according to any of claims 10 to 16, **characterised in that** a mould core (33) is used which has on its outer surface a surface structure (26a) which is in particular represented by at least one projection (24a) and/or by at least one recess (25a) and which, while forming a complementary surface structure (26), represents a negative in the inner surface of the raw material (34) which faces the mould core (33).

## Revendications

1. Ensemble soufflet, comprenant au moins une unité de soufflet (2), qui présente un corps de soufflet (3) qui entoure une chambre de soufflet (4) pouvant être remplie d'un fluide et dont la paroi est formée au moins en partie par un élément de membrane (5) élastique d'un seul tenant, lequel élément de membrane présente au moins deux parois frontales (12, 13) se faisant face à distance dans la direction axiale d'un axe longitudinal (14) de l'unité de soufflet (2) et une paroi périphérique (15) reliant de manière périphérique les deux parois frontales (12, 13), **caractérisé en ce que** l'unité de soufflet (2) présente un corps de remplissage (23) disposé de manière imperdable dans la chambre de soufflet (4) et séparé par rapport au corps de soufflet (3), la forme dudit corps de remplissage correspondant au moins essentiellement à la forme négative des zones de la chambre de soufflet (4) délimitées par l'élément de membrane (5).

2. Ensemble soufflet selon la revendication 1, **caractérisé en ce que** l'élément de membrane (5) est constitué d'un matériau en caoutchouc produit par vulcanisation avec un matériau brut (34) pouvant être vulcanisé après que le corps de remplissage (23) a été enveloppé.

3. Ensemble soufflet selon la revendication 1 ou 2, **caractérisé en ce que** les deux parois frontales (12, 13) se faisant face de l'élément de membrane (5) sont réalisées de manière à présenter une forme de disque.

4. Ensemble soufflet selon l'une quelconque des revendications 1 à 3, **caractérisé en ce que** la paroi du corps de soufflet (3) est traversée par au moins un canal de fluide (18) communiquant avec la chambre de soufflet (4).

5. Ensemble soufflet selon l'une quelconque des revendications 1 à 4, **caractérisé en ce qu'**un élément supplémentaire (6) séparé par rapport à l'élément de membrane (5) est intégré dans au moins une des deux parois frontales (12, 13) de l'élément de membrane (5), sachant qu'au moins un élément supplémentaire (6) définit de manière appropriée un canal de fluide (18) communiquant avec la chambre de soufflet (4) et/ou une interface de fixation (22) pour une composante externe.

6. Ensemble soufflet selon l'une quelconque des revendications 1 à 5, **caractérisé en ce que** le corps de remplissage (23) est réalisé de manière rigide ou de manière élastiquement déformable.

7. Ensemble soufflet selon l'une quelconque des revendications 1 à 6, **caractérisé en ce que** sont réalisées dans la surface extérieure (21) du corps de remplissage (23) et dans la surface intérieure (8), délimitant la chambre de soufflet (4), de l'élément de membrane (5), des structures de surface (26, 26a) associées les unes aux autres par paire et complémentaires les unes des autres, en particulier sous la forme de parties faisant saillie (25, 24a) et de creux (24, 25a) complémentaires les uns des autres.

8. Ensemble soufflet selon l'une quelconque des revendications 1 à 7, **caractérisé en ce que** le corps de remplissage (23) est réalisé de manière à présenter une forme de disque et/ou est disposé de manière lâche à l'intérieur de la chambre de soufflet (4).

9. Ensemble soufflet selon l'une quelconque des revendications 1 à 8, **caractérisé en ce qu'**au moins une unité de soufflet (2) forme un actionneur à actionnement fluidique et/ou une pompe et/ou un amortisseur de chocs.

10. Procédé servant à fabriquer une unité de soufflet (2), qui présente un corps de soufflet (3) qui entoure une chambre de soufflet (4) pouvant être remplie d'un fluide et dont la paroi est formée au moins en partie par un élément de membrane (5) élastique d'un seul tenant, lequel élément de membrane présente au moins deux parois frontales (12, 13) se faisant face à distance dans la direction axiale d'un axe longitudinal (14) de l'unité de soufflet (2) et une paroi périphérique (15) reliant de manière périphérique les parois frontales (12, 13), **caractérisé en ce qu'**un matériel brut (34) est appliqué tout autour du noyau de moule (33), dont la forme correspond au moins essentiellement à la forme négative des zones de la chambre de soufflet (4) délimitées par l'élément de membrane (5), lequel matériau brut est élastifié immédiatement après en formant l'élément de membrane (5), sachant que le noyau de moule (33) reste en tant que corps de remplissage (23) de manière imperdable dans la chambre de soufflet (4) délimitée par l'élément de membrane (5) finalisé.

11. Procédé selon la revendication 10, **caractérisé en ce qu'**on utilise comme matériau brut (34), un matériau pouvant être vulcanisé, en particulier du caoutchouc, sachant que l'élastification est effectuée par vulcanisation.

12. Procédé selon la revendication 10 ou 11, **caractérisé en ce que** le noyau de moule réalisé de préférence de manière à présenter la forme d'un disque est placé en sandwich entre deux couches de matériau brut (34a, 34b) extérieures du matériau brut (34), lesquelles dépassent du noyau de moule (33) respectivement côté bord tout autour avec une section de bordure (35a, 35b), sachant que dans le cas d'une vulcanisation subséquente, les sections de bordure (35a, 35b) des deux couches de matériau brut (34a, 34b) extérieures sont reliées entre elles par liaison de matière.

13. Procédé selon la revendication 12, **caractérisé en ce qu'**avant la vulcanisation, au moins une couche de matériau brut (36) annulaire séparée est placée entre les sections de bordure (35a, 35) des deux couches de matériau brut (34a, 34b) extérieures de façon à entourer de manière concentrique le noyau de moule (33), sachant que dans le cas de la vulcanisation subséquente, les sections de bordure (35a, 35b) des couches de matériau brut (34a, 34b) extérieures et la couche de matériau brut (36) annulaire au moins au nombre de une sont reliées entre elles par liaison de matière.

14. Procédé selon l'une quelconque des revendications 10 à 13, **caractérisé en ce que** le matériau brut (34) utilisé présente au moins un perçage (38).

15. Procédé selon l'une quelconque des revendications 10 à 14, **caractérisé en ce qu'**est introduit dans le matériau brut (34), dans une zone formant à l'état finalisé une paroi frontale (12, 13) de l'élément de membrane (5), avant l'élastification, un élément supplémentaire (6) de préférence rigide, qui définit de manière appropriée un canal de fluide (18) communiquant avec la chambre de soufflet (4) et/ou une interface de fixation (22) pour une composante externe.

16. Procédé selon l'une quelconque des revendications 10 à 15, **caractérisé en ce qu'**on utilise comme noyau de moule (33) un élément rigide ou un élément élastique.

17. Procédé selon l'une quelconque des revendications 10 à 16, **caractérisé en ce qu'**un noyau de moule (33) est utilisé, lequel présente au niveau de sa surface extérieure une structure de surface (26a) formée en particulier par au moins une partie faisant saillie (24a) et/ou par au moins un creux (25a), laquelle structure de surface est reproduite en formant une structure de surface complémentaire (26) en tant que négatif dans la surface intérieure, tournée vers le noyau de moule (33), du matériau brut (34).
